(19) **Europäisches Patentamt**

**European Patent Office**

**Office européen des brevets**

(11) **EP 1 548 347 A1**

(12) **EUROPEAN PATENT APPLICATION**

(43) Date of publication:
**29.06.2005 Bulletin 2005/26**

(51) Int Cl.⁷: **F16L 23/036**

(21) Application number: **03079164.4**

(22) Date of filing: **23.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Griffioen, Willem**<br>**2461 XJ Ter Aar (NL)** |
| (71) Applicant: **Griffioen, Willem**<br>**2461 XJ Ter Aar (NL)** | (74) Representative:<br>**Prins, Adrianus Willem, Mr. Ir. et al**<br>**Vereenigde,**<br>**Nieuwe Parklaan 97**<br>**2587 BN Den Haag (NL)** |

(54) **Method for creating a seal assembly, a seal assembly and a clamping device for such a seal assembly**

(57)    A method for creating a seal assembly and a seal assembly for coupling a first flange (3; 13) and a second flange (4; 14), comprising at least one clamping device (7, 11; 7, 12; 21, 22; 17, 18, 19) consisting of at least a first element (7; 21; 17, 18) and a second element (11; 12; 21; 19), the first element being designed to apply on the first flange at a first position and the second element being designed to apply on the second flange at a second position, characterized in that the device applies on the second flange at two second subpositions, which are located at both sides of and at a predetermined distance (d/2) from a location on the second flange directly opposite the first location on the first flange.

By this seal assembly a high quality sealing can be obtained with a considerably smaller number of clamping means than in the prior art seal assemblies.

FIG. 8

**Description**

The present invention relates to seal assemblies, and more particularly, to seal flange assemblies with gaskets such as O-rings, usually made of elastomeric material or metal for connecting, for example, flanged pipe couplings (e. g. for oil-, sewer- or gas pipes), separable pressure chambers or vacuum vessels, splice closures (e.g. for power or telecom cables), pump or motor housings and numerous other apparatuses in various fields.

In connecting pipes, pressure chambers, vacuum vessels or closures from various apparatuses, the inside must be sealed and isolated from the outside. When the area of the seal flange assembly is large, and/or when high internal pressures are required, and/or when ultrahigh vacuum free of impurities is to be maintained and/or when low temperatures are required, a lot of compression (clamping) points, usually supplied using bolts and nuts, are needed. In the case of ultrahigh vacuum or low temperatures, metal gaskets are used, which in general need be baked out.

In US Patent 4,988,130 equations are given for the minimum bolt number and flange thickness in the case of metal seal flange assemblies for connecting ports of a plasma vacuum vessel for a nuclear fusion apparatus. Said equations depend on the rigidity of the flanges, i.e. the thickness and material of the flanges, the diameter of the flanges, and the material of the gasket. In the cited patent the bolt number, flange thickness and bolt tightening torque are smaller than when using common practical recommendation standards.

In another field of technique, mentioned in W. Griffioen, "Optical fiber mechanical reliability", thesis, Eindhoven University (NL), 25 April 1995, a description is given of a double-mandrel technique where clamping different turns of optical fibre slip-free between 2 rods is obtained by a 3-point alternating clamping technique.

The object of the invention is to further improve seal assembly, in order to be able to reduce the number of bolts and/or the flange thickness and/or the bolt tightening torque considerably, without reducing the sealing performance, or even improving this sealing performance.

To this effect the invention provides a method for creating a seal assembly, wherein a first flange and a second flange are coupled by at least one clamping device which, by means of a pulling force which applies on the first and second flange on a first position and a second position, respectively, pulls the flanges together, characterized in that the second position consists of two subpositions which are located at both sides of and at a predetermined distance from a location on the second flange directly opposite the first location on the first flange.

When more than one clamping device is provided, the mutual distance between the centres of those clamping devices being d, said predetermined distance preferably is d/2.

In most applications of a seal assembly a gasket, such as an O-ring, will be provided between the flanges

In this way a seal with an almost exact match of the deformed compressing surfaces, and hence uniformly distributed sealing load, can be obtained, so that the number of bolts and/or the flange thickness and/or the bolt tightening torque can be reduced considerably, without reducing the sealing performance. Furthermore the assembly suffers less from differences in thermal contraction and the bolt tightening torque becomes less critical. This leads to minimising construction costs, ease of assembling and disassembling work, a lower possibility of bolts or gaskets being damaged and a better quality of the sealing.

According to a preferred embodiment the first and second element can be coupled and the device consisting of the coupled first and second elements has a T-shape, the ends of the horizontal bar of the T having a notch near both ends, which notches each apply against the second flange.

According to another aspect of the invention the first element has an external thread and the second element has an internal thread, which elements can be screwed together, one of the elements being designed to pass through opposite corresponding openings in the first and second flanges.

According to again another aspect of the invention the element with the external thread is a T-shaped element, the leg of the T being provided with the external thread and that the element with the internal thread is a nut.

According to again another aspect of the invention the notches on both ends of the horizontal bar of the T-shaped element are at least partly located in opening which are formed in the second flange.

According to again another aspect of the invention the clamping device consists of three elements. The first element is a T-shaped element with a hole, wherein the second element, a bolt, is placed, which also extends through both flanges. Tightening is done by the third element, a nut.

According to a second embodiment of the invention the flanges are tapered in cross-section and the first and second elements are connected to each other by means of a connecting element, to form one section of a ring-shaped device comprising a number of at least two of such sections, the first and second element of each section also being tapered in cross-section in order fit over the corresponding flanges.

According to another aspect of the invention the thickness of the flange varies between succeeding clamping devices, in order to improve the quality of the seal.

This aspect of the invention preferably, but not exclusively can be applied in cases where an ideal match of the flanges is not entirely obtained by alternating clamping, as may be the case at the edge of non-circular flanges.

The invention also provides a seal assembly and a clamping device for use in a seal assembly according to the invention.

The invention shall be explained further at the hand of embodiments with reference to the drawing, in which

FIG. 1 shows a pipe with flange assembly according to the prior art.
FIG. 2 is a sectional view showing a flange assembly with counter-clamping bolts and nuts according to the prior art.
FIG. 3 shows a section of flange assembly with claw counter-clamping tightening parts according to the prior art.
FIG. 4 is a graph showing forces for the prior art counter-clamping tightening for infinite 1-dimensional flanges.
FIG. 5 is the upper part of FIG. 4 showing all relevant forces and bending moments.
FIG. 6 is a sectional view showing an example of a flange assembly according to the invention with alternating-clamping tightening parts.
FIG. 7a is like FIG. 6, but now with half the amount of larger tightening parts.
FIG. 7b is a top view of FIG. 7a.
FIG. 8 shows a section of flange assembly according to the invention with claw alternating-clamping tightening parts.
FIG. 9 is a graph showing forces for the inventive alternating-clamping tightening for infinite 1-dim. flanges.
FIG. 10 is a side view of an alternative embodiment of the invention.
FIG. 11 is a top view of a part of the ring of clamps used in FIG. 10.
FIG. 12 is a top view of the entire ring of clamps used in FIG. 10.
FIG. 13 is a graph showing forces for a finite body with counter-clamping forces at its end only as in the prior art.
FIG. 14 is the lower-right part of FIG. 13 showing all relevant forces and bending moments.
FIG. 15 is a graph showing forces for finite flanges with counter-clamping forces in the middle only as in the prior art.
FIG. 16 is the upper-right part of FIG. 15 showing all relevant forces and bending moments.
FIG. 17 is a graph showing forces for finite flanges with 3 alternating-clamping forces, in accordance with the invention.
FIG. 18 is a graph showing a best-match and an approximate best-match upper flange thickness for the situation of FIG. 17.
FIG. 19 is an example of a prior art finite flange assembly with counter-clamping in the middle only.
FIG. 20 is an example of a finite flange assembly with 3 alternating-clamping forces, according to the invention.

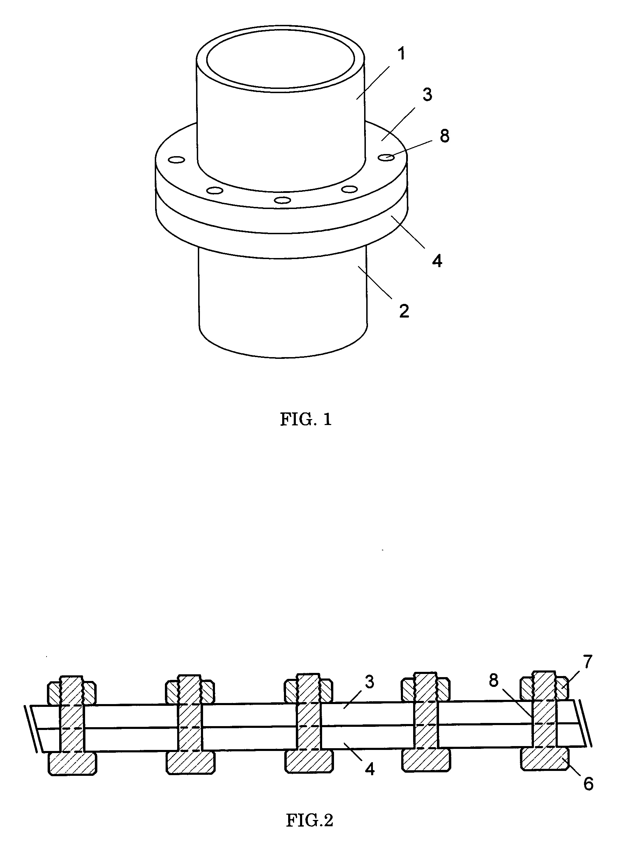

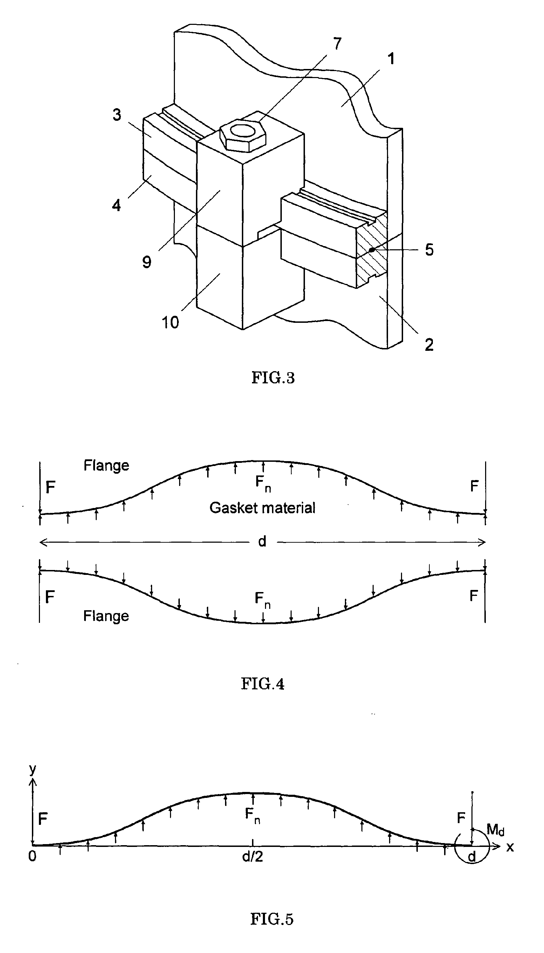

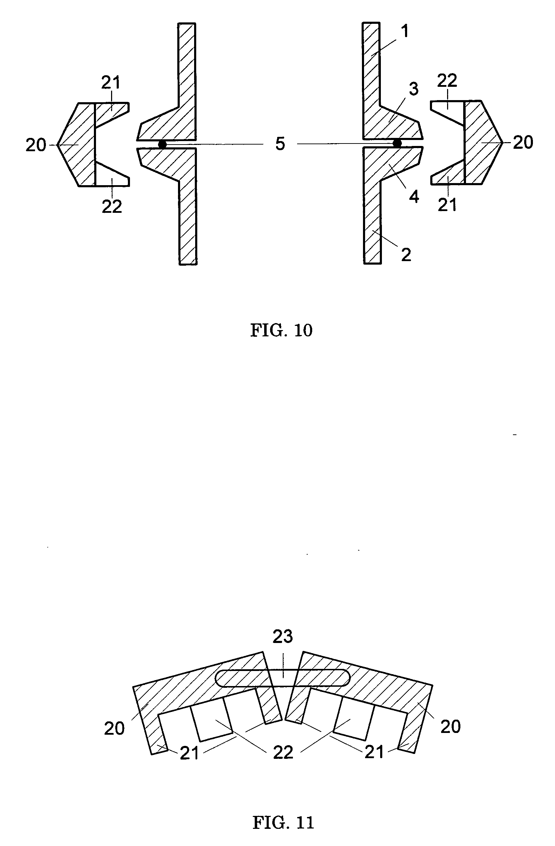

The solution given by the invention best can be understood by describing in detail also some prior art seal assemblies and their specific properties.
In a prior art embodiment shown in FIG. 1, a pipe-end 1 is connected to a pipe-end 2 by clamping their flanges 3 and 4 to each other, between which flanges a gasket 5 (shown in FIG. 3) is compressed and sealing is obtained. In common technology compressing is done by tightening bolts 6 and nuts 7 through the holes 8, as is shown in FIG. 2. In FIG. 3, claw clamping tightening parts 9 and 10 with bolts 6 and nuts 7 are shown, which are commonly used as an alternative to using bolts and nuts only.
Clamping flanges according to the prior art also is done using chain-alike rings of clamping bodies, the principle of which is shown in the Figures 10-12. Tightening such a ring by tangential forces results in radial forces all over the ring. Due to the tapered shape of the clamping bodies the radial forces are transferred into axial forces which clamp the flanges together, at every clamping body.

EXAMPLE 1: INFINITE 1-DIMENSIONAL FLANGE

In this example prior art counter-acting clamping forces F are applied to compress a gasket every intermediate distance d on a flange which extends infinitely over 1 dimension. This applies approximately for the case of straight sections of large boxes or for the case of cylindrical flanges. In FIGS. 1, 2 and 3 examples of this commonly used technique are shown.
The gasket material responds to the counter-acting forces $F$ with a distributed normal force $F_n$, as schematically shown in FIG. 4. This normal force is assumed to be constant, so:

$$F = \frac{1}{2} F_e = \frac{1}{2} F_n d \qquad (1)$$

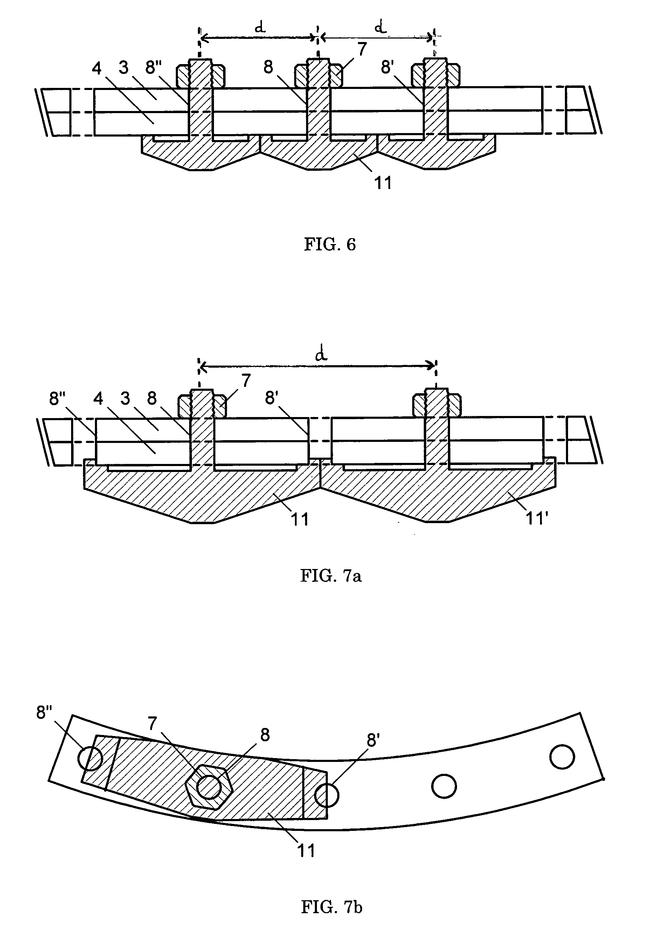

$F$ is half the effective force $F_e$ supplied by the bolts and nuts because neighbouring sections left and right possess the same forces $F$ left and right, so that a double effective force is obtained when the sections are combined. In this case all individual sections have their total forces balanced, which is needed for the calculations. The relevant forces and moments are given in FIG. 5, which corresponds to the upper part of FIG. 4.
Consider the bending moment $M$ for a point $x$ between 0 and $d$, looking at the right side (only valid when right from $x = d$ the total forces are balanced):

$$M = -(d - x)F + \int_x^d F_n(s - x)ds + M_d = -(d - x)F + F_n(\tfrac{1}{2}d^2 - xd + \tfrac{1}{2}x^2) + M_d \quad (2)$$

wherein $s$ is a parameter (along the $x$ co-ordinate) for integrating between the points $x$ and $d$.

The radius of curvature $R$ follows from:

$$\frac{1}{R} = \frac{M}{B} . \quad (3)$$

wherein $B$ is the stiffness of the flange. Also:

$$\frac{1}{R} \approx \frac{d^2y}{dx^2} = y'' \quad (4)$$

Combining and integrating, with boundary conditions $y'(0) = 0$, $y'(d/2) = 0$ and $y'(d) = 0$, results in:

$$y' = \frac{F_n}{B}\left(\tfrac{1}{12}xd^2 - \tfrac{1}{4}x^2d + \tfrac{1}{6}x^3\right) \quad \text{and} \quad F = \tfrac{1}{2}F_n d \quad (5)$$

The latter had already been stated. Integrating once more, with boundary condition $y(0) = 0$, results in:

$$y = \frac{F_n}{B}\left(\tfrac{1}{24}x^2d^2 - \tfrac{1}{12}x^3d + \tfrac{1}{24}x^4\right) \quad (6)$$

The maximum value $y_{max}$ is reached for $x = d/2$:

$$y_{max} = \frac{F_n}{B}\frac{d^4}{384} \quad (7)$$

The distance $\Delta y_{max}$ between the flanges is twice this value, as is immediately clear from FIG. 4:

$$\Delta y_{max} = \frac{F_n}{B}\frac{d^4}{192} \quad (8)$$

Expressed in $F_e$:

$$\Delta y_{max} = \frac{F_e}{B}\frac{d^3}{192} \quad (9)$$

Since the minimum $\Delta y$ is zero $\Delta y_{max}$ is the maximum difference of flange distances.

According to the present invention alternating forces F are applied to the flange to compress the gasket. Examples are shown in FIG. 6, 7a, 7b and 8. In FIG. 6 the bolt 6 of FIG. 2 has now been replaced by a T-bone shaped body 11, which sticks through hole 8 and is tightened by nut 7. It extends to the "neighbouring" T-bone shaped bodies. Contact with the upper flange 3 is made by nut 7 at the place of hole 8. Contact with the lower flange 4 is made in the middle betweem hole 8 and its "neighbouring" holes 8' and 8".

In FIG. 7a a twice as large T-bone shaped body 11 is shown, now extending until "neighbouring" holes 8' and 8" where it meets "neighbouring" bodies 11' and 11" (the latter is not shown). In FIG. 7b a top view is shown of FIG. 7a.

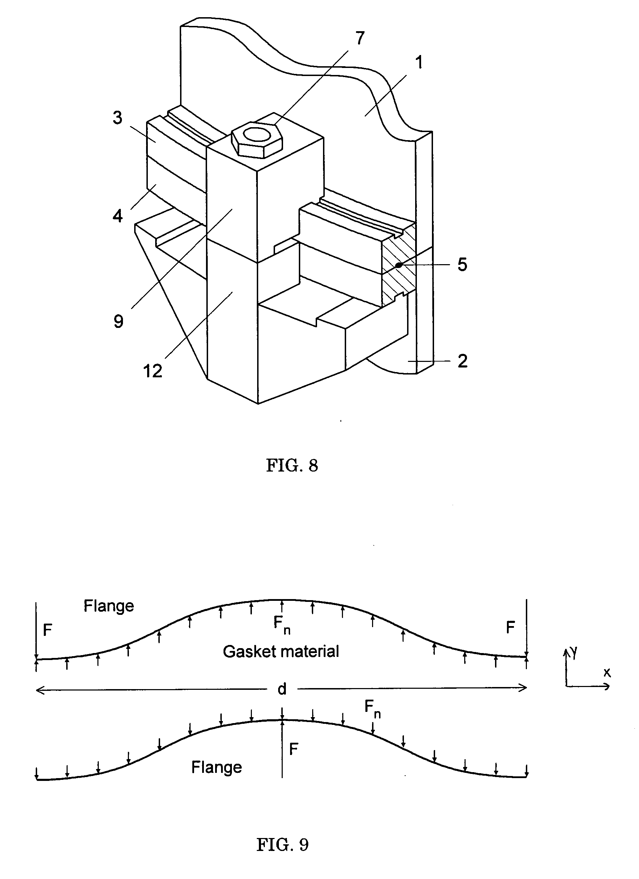

The principle of the invention also is used in FIG. 8, where the claw clamping part 10 of FIG. 3 is replaced by a T-bone shaped clamping part 12. The T-bone shaped clamping part 12 can also be made hinged to fit (small diameter) cylindrical flanges universally, by giving the horizontal leg of the "T" an appropriate shape.

As schematically shown in FIG. 9, alternating forces F are applied to the flange to compress the gasket, every intermediate distance d (see also FIG. 6). The force on the lower flange is shifted with respect to the force on the upper flange over a length $d/2$ and than mirrored with respect to the $x$-axes. The distance between the flanges is zero at $x = 0$ and $x = d/2$ when for the lower flange also $y(d/2)$ is added. In the section from $x = 0$ to $d/2$ the position of the surface of the lower flange can be expressed in the same function $y$ as in equation (6), as $-y(d/2-x) + y(d/2)$:

$$- y(d/2 - x) + y(d/2) = \frac{F_n}{B}\left(\frac{1}{48} x^2 d^2 - \frac{1}{24} x^4\right) \tag{10}$$

The distance between the flanges $\Delta y$ follows from $\Delta y = y + y(d/2-x) - y(d/2)$:

$$\Delta y = \frac{F_n}{B}\left(\frac{1}{48} x^2 d^2 - \frac{1}{12} x^3 d + \frac{1}{12} x^4\right) \tag{11}$$

The maximum is found for $x = d/4$:

$$\Delta y_{\max} = \frac{F_n}{B}\frac{d^4}{3072} \tag{12}$$

Expressed in $F_e$:

$$\Delta y_{\max} = \frac{F_e}{B}\frac{d^3}{3072} \tag{13}$$

This means that $\Delta y_{max}$ is 16 times less than for traditional counter-clamping as in the FIGS. 1-3. Also, the forces at bolts and nuts are lower, because the normal force $F_n$ is more homogeneous (as is assumed) while for traditional counter clamping a part of the clamping force is wasted to excessive normal forces at the place where $\Delta y$ is the least. Also the risk to damage the gasket by tightening the nut too fast becomes smaller, because the compression by the nut will always find a distributed responding force. Furthermore the seal assembly suffers less from differences in thermal contraction, creep, etc, between flange and clamping device. The difference in thermal contraction between the different parts results now only in a little extra flexing of the flanges, instead of extra compressing on a small section close to the bolts resulting in large effects on the thin gasket. The seal assembly according to the invention therefore is very suitable for low-temperature applications or for ultra-high vacuum applications where metal gaskets are baked out first before pumping. Also the bolt-tightening torque becomes less critical, because the flange bends gradually. This allows simpler tightening tools without torque adjustment. The T-bone shaped clamping parts 11 or 12 can even be made such that their bending supplies the right compression force when "tightened to the end" (which can be felt when tightening).

The lower difference in $\Delta y$ and the lower forces at bolts and nuts, as an alternative to obtaining a smaller $\Delta y$, allows larger intermediate distances between the clamping forces. At a double distance $2d$ the difference in $\Delta y$ is still the same as for counter-acting clamping with distance d (see FIGS. 7a,b) . With this distance the same holes in the flanges can be used, but now with half the amount of nuts to tighten. When new flanges are used a compromise for the intermediate hole distance can be chosen, somewhere between the same distance and the double distance, thereby decreasing the value of $\Delta y$ and the number of bolts to be tightened at the same time. For claw clamping this freedom is already present for existing flanges, only the T-bone shaped clamping part width has to be chosen conveniently.

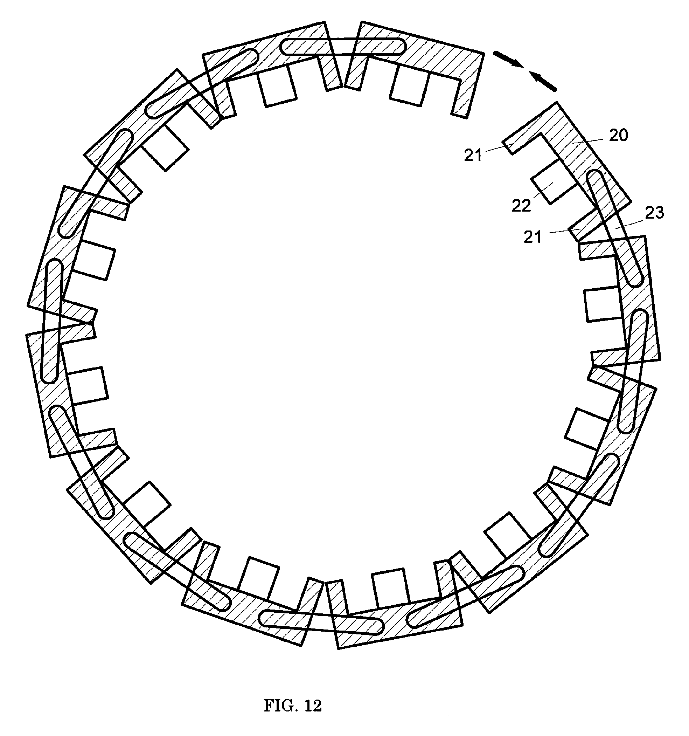

In another embodiment of the invention, shown in FIG. 10, a pipe-end 1 is connected to a pipe-end 2 by clamping their flanges 3 and 4 to each other, between which a gasket 5 is compressed and sealing is obtained. The clamping mechanism here consists of a ring (see FIGS. 11 and 12) formed by at least two clamping bodies 20. In the prior art sealing assembly the clamping bodies compress counter-acting. According to the present invention the clamping is obtained again alternating at the upper and lower flange. For this the clamping parts 20 have their clamping extension 21 and 22 alternating against the upper and lower flange, respectively, as clearly can be seen in FIGS. 10, 11. The clamping parts 20 are connected by chain connecting parts 23.

EXAMPLE 2: FINITE 1-DIMENSIONAL FLANGE

In this example a flange extends finitely over 1 dimension. This applies approximately for the case of the longest side of rectangular boxes. When the length of the other, shorter side of the box is not negligible the problem requires, in principle, a 3-dimensional solution, which, however, is not treated herein. A 3-dimensional solution for optimised alternative clamping can e.g. be obtained using finite-element analysis. In the present example only sections neighbouring the edge are discussed. Situations with a larger number of sections may be regarded approximately as infinite like sections in the middle and the finite sections discussed in this example at both ends.

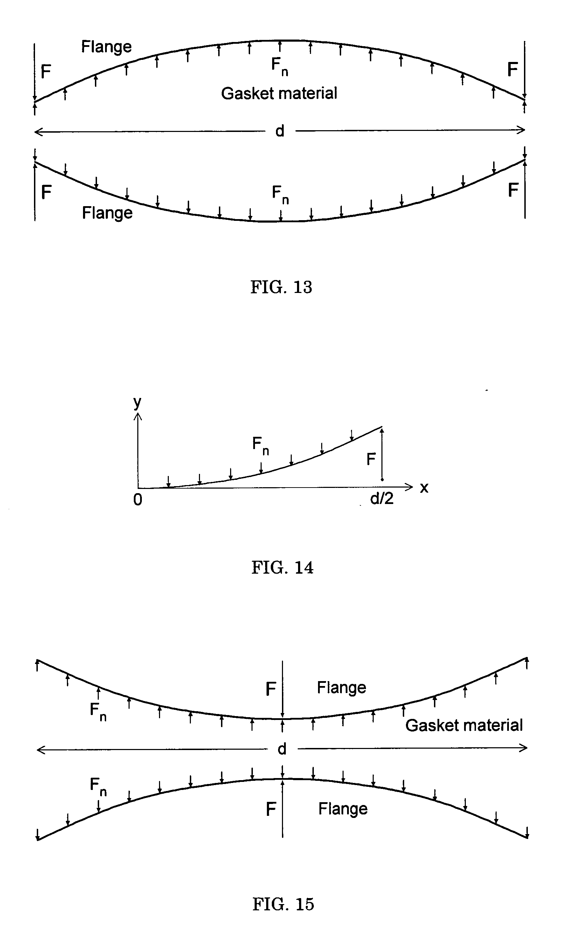

A common technology to seal boxes is to clamp a gasket between flanges with clamping means at both ends of the longest side. The relevant forces and moments are shown in FIGS. 13 and 14, wherein FIG. 14 shows a part corresponding to the lower right part of FIG. 13.

Note that this time $F_e = F = \frac{1}{2}F_n d$. Consider the bending moment $M$ for a point $x$ between 0 and $d/2$, looking at the right side only (no bending moment at and forces right from $x = d/2$):

$$M = (\tfrac{1}{2}d - x)F - \int_{x}^{d/2} F_n(s - x)ds = F_n\left(\tfrac{1}{8}d^2 - \tfrac{1}{2}x^2\right) \tag{14}$$

With boundary conditions $y'(0) = 0$ and $y(0) = 0$ it follows:

$$y = \frac{F_n}{B}\left(\tfrac{1}{16}x^2 d^2 - \tfrac{1}{24}x^4\right) \tag{15}$$

The maximum distance is reached for x = d/2:

$$y_{\max} = \frac{F_n}{B}\, d^4\, \frac{5}{384} \tag{16}$$

The distance $\Delta y_{max}$ between the flanges is twice this value:

$$\Delta y_{\max} = \frac{F_n}{B}\, d^4\, \frac{5}{192} = \frac{F_e}{B}\, d^3\, \frac{5}{96} \tag{17}$$

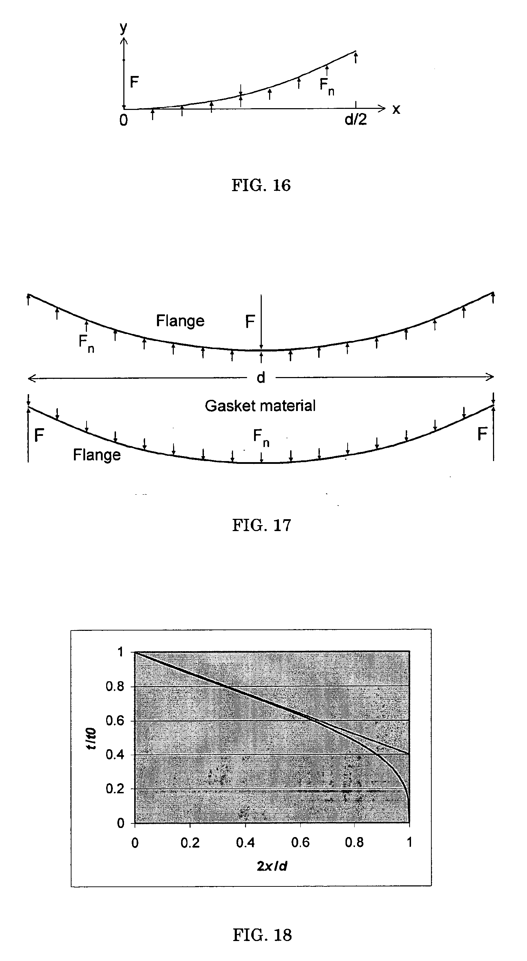

Another common technology to seal boxes is to clamp a gasket between flanges in the middle of the longest side only. This is shown schematically in FIGS. 15 and 16. The relevant forces (only normal forces this time) are given in FIG. 16, which shows the part corresponding to the upper right part of FIG. 15.

Note that now again $F_e = F = F_n d$. Consider the bending moment $M$ for a point $x$ between 0 and $d/2$, looking at the right side only (no moment at and forces right from $x = d/2$):

$$M = \int_{x}^{d/2} F_n(s - x)ds = F_n\left(\tfrac{1}{8}d^2 - \tfrac{1}{2}xd + \tfrac{1}{2}x^2\right) \tag{18}$$

With boundary conditions $y'(0) = 0$ and $y(0) = 0$ it follows:

$$y = \frac{F_n}{B}\left(\frac{1}{16}x^2 d^2 - \frac{1}{12}x^3 d + \frac{1}{24}x^4\right) \tag{19}$$

The maximum distance is reached for $x = d/2$:

$$y_{max} = \frac{F_n}{B}\frac{d^4}{128} \tag{20}$$

The distance $\Delta y_{max}$ between the flanges is twice this value:

$$\Delta y_{max} = \frac{F_n}{B}\frac{d^4}{64} = \frac{F_e}{B}\frac{d^3}{64} \tag{21}$$

According to the present invention also in this example alternating forces F are applied to the flange to compress the gasket: in the middle at the upper flange and at the ends at the lower flange (see FIG. 17), or vice versa. The distance between the flanges is obtained by subtracting equation (20) from equation (16):

$$\Delta y_{max} = \frac{F_n}{B}\frac{d^4}{196} \tag{22}$$

This is five times less than for the situation with counter clamping at the ends and three times less than for counter clamping in the middle. The possible reduction in nuts is a factor two compared to counter clamping at the ends.
If desired, a still better match can be obtained when the stiffness of the flange clamped in the middle, $B_{middle}$, is 3/5 times that of the flange clamped at the ends. Subtracting equation (15) from 5/3 times equation (19) results in:

$$\Delta y = \frac{F_n}{B}\left(\frac{1}{24}x^2 d^2 - \frac{5}{36}x^3 d + \frac{1}{9}x^4\right) \tag{23}$$

In this equation $B$ is the stiffness of the flange clamped at the end. The maximum for $\Delta y$ is reached at:

$$x = \frac{15}{32}d\left(1 - \sqrt{\frac{11}{75}}\right) \tag{24}$$

The value of the maximum is:

$$\Delta y_{max} \approx 0.0009\,\frac{F_n}{B}\,d^4 \tag{25}$$

This means that a further reduction of about a factor six is obtained.
A reduction to even $\Delta y_{max} = 0$ between the flanges is possible by exact matching of the stiffness of the flanges, such that $M/B$ becomes the same everywhere. The matching stiffness is obtained by the quotient of equations (18) and (14):

$$\frac{B_{middle}}{B} = \frac{\frac{1}{8}d^2 - \frac{1}{2}xd + \frac{1}{2}x^2}{\frac{1}{8}d^2 - \frac{1}{2}x^2} = \frac{\frac{1}{2}d - x}{\frac{1}{2}d + x} \tag{26}$$

From equation (26) a flange thickness $t$ follows (the stiffness of a rectangular flange is proportional to $t^3$) for the flange which is clamped in the middle, compared to the constant thickness to of the flange which is clamped at the ends, as is given by the curved line in FIG. 18. The straight line, where $t$ varies linearly from 100% to 40% going from 0 to $d/2$, is a simple approximation of this curved line. Note that the part at the very ends ($x \approx d/2$) hardly counts for bending of the flange.

Such exact matching can also be obtained for infinite (or cylindrical) extending flanges. This is not always practical, but sometimes, e.g. when flanges are made out of moulds, a lot of reduction in mounting work can be the result.

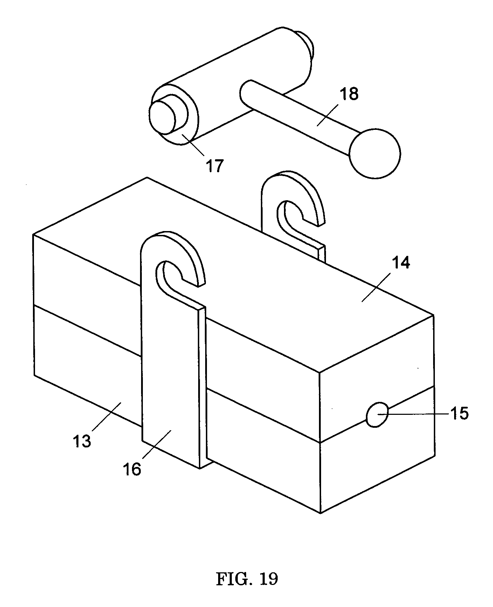

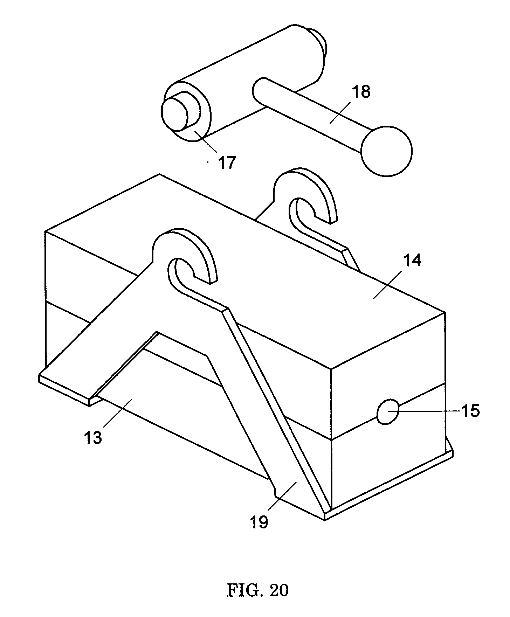

FIG. 19 gives as an example a dividable cable lubricator that is placed after a cable-jetting device which is well-known, but not shown, because it is not relevant for the present invention. The lubricator is a box with a lower part 13 and an upper part 14 and with a tube inlet (not shown) and outlet 15 and with lubricated foam parts (not shown) through which the cable (not shown) is pushed. As a result of the operation the box is under air pressure. In a first attempt the box was clamped only in the middle, with a clamping piece 16. Tightening was done by rotating an excenter 17 with handle 18. This did not work. The air was leaking and the tubes (not shown), clamped at both ends, were blown out. Then a modification was made using an alternating clamping piece 19 in accordance with the present invention, still using the same excenter to close the box in a simple way, see FIG. 20. Now air was not leaking anymore and the tubes were gripped firmly.

NUMERICAL EXAMPLE

Consider a (DIN) DN 100 CF-flange, but with half the flange thickness to illustrate better the thermal contraction behaviour. The following calculation is a rough calculation, only serving to illustrate the effects.

The following parameters apply:

| Flange thickness | $t$ | 10 mm |
|---|---|---|
| Flange width | $w$ | 24 mm |
| Number of bolts | | 16 |
| Bolt distance | $d$ | 25.6 mm |
| Bolt size | | M8 |
| Young's modulus stainless steel | $E$ | 200 GPa |
| Thermal contraction stainless steel | $\alpha$ | $12 \times 10^{-6}$ K$^{-1}$ |

The stiffness $B$ of the flange, is given by:

$$B = \frac{wt^3}{12} E$$

which is equal to 400 Nm$^2$ for this flange.

The force $F_e$ of he bolts is estimated to be about 8000 N. This results in a $\Delta y_{max}$ of about 2 μm (equation 9) for counter clamping.

Reducing the number of the bolts by a factor of 2 results in a $\Delta y_{max}$ of about 28 μm (and also in a double force $F_e$ of he bolts of 16000 N, so better to choose a larger boltsize). This situation is now analysed when thermal contraction occurs.

Assume that an indium O-ring with a diameter of 1 mm was compressed to a 100 μm thick layer between the flanges. Assume next a difference in temperature of 100 K between bolts and flanges during heating or cooling, while the effective bolt length (including effects of rings and nuts) is 50 mm. This results in a difference in thermal shrinkage of about 60 μm. This is a local compression of the O-ring by a factor of 2.5 near the bolts! The bolt force can than increase to 40000 N, with a risk for damage, and $\Delta y_{max}$ now increases to 70 μm. For counter clamping the compression of the O-ring, ranging from 100 to 128 μm originally, will now range from 40 to 110 μm. When the temperatures become equal again this will probably worsen the sealing performance.

In the case of alternating clamping the difference in thermal contraction of the bolts is now shared between O-ring compression and flexing of the flanges. A shrinkage of 40 μm of the flanges corresponds to a factor of 1.7, hence a bolt force of 27000 N and flexing of 48 μm. The latter increased by 20 μm, so the total of 60 μm excess bolt shrinkage is reached for this case. For alternating clamping the compression of the O-ring, ranging from 100 to 102 μm originally, will now range from 60 to 62 μm.

Now, for alternating clamping, the differences in O-ring compression due to thermal contraction of the bolts and nuts, as well as the homogeneity of compression over the flange and the bolt tension are more favourable than for counter clamping. This illustrates that not only the number of bolts can be halved, but at the same time also the flange thickness can be reduced, while still showing acceptable behaviour.

A further improvement is obtained when the T-bone clamping parts also flex. This is always the case to some extent and can be adjusted to better matching: the thinner the better, as long as T-functioning remains intact.

For the person skilled in the art it will be clear that modifications of the disclosed embodiments are possible.

**Claims**

1.  A method for creating a seal assembly, wherein a first flange (3; 13) and a second flange (4; 14) are coupled by at least one clamping device (7, 11; 7, 12; 21, 22; 17, 18, 19) which, by means of a pulling force which applies on the first and second flange on a first position and a second position, respectively, pulls the flanges together, **characterized in that** the second position consists of two subpositions which are located at both sides of and at a predetermined distance (d/2) from a location on the second flange directly opposite the first location on the first flange.

2.  A method according to claim 1, wherein at least two clamping devices are provided at a mutual distance (*d*), said predetermined distance being half of this mutual distance.

3.  A method according to claim 1 or 2, wherein a gasket is placed between the two flanges.

4.  A method according to claim 1, 2 or 3, wherein the clamping means comprise at least one element with an external thread and one element with an internal thread, which are screwed together, one of the elements passing through a pair of opposite, corresponding openings in the first and second flange, **characterized in that** the completed element has a T-shape, the end of the horizontal bar of the T-shape having a notch near both ends, which notches each apply against the second flange at a second subposition.

5.  A method according to claim 4, **characterized in that** the element with an external thread is a T-shaped element, the leg of the T being provided with the external thread and that the element with the internal thread is a nut.

6.  A method according to claim 4 or 5, **characterized in that** the notches at both ends of the horizontal bar of the T-shaped element at least partly are located in openings (8) which are formed in the second flange.

7.  A method according to claim 1, **characterized in that** the clamping means comprise an excenter which applies the pulling force and that the clamping means further comprise two V-shaped elements, which are positioned on opposite sides of both flanges, each of the free ends of the legs of one V-shaped element being connected with the corresponding free end of the leg of the other V-shaped element and that the tops of both V-shaped elements comprise means for accommodating the excenter.

8.  Seal assembly for coupling a first flange (3; 13) and a second flange (4; 14), comprising at least one clamping device (7, 11; 7, 12; 21, 22; 17, 18, 19) consisting of at least a first element (7; 21; 17, 18) and a second element (11; 12; 22; 19), the first element being designed to apply on the first flange at a first position and the second element being designed to apply on the second flange at a second position, **characterized in that** the device applies on the second flange at two second subpositions, which are located at both sides of and at a predetermined distance (*d*/2) from ae location on the second flange directly opposite the first location on the first flange.

9.  Seal assembly according to claim 8, wherein at least two clamping devices are provided at a mutual distance (d), said predetermined distance being half of this mutual distance.

10. Seal assembly according to claim 8 or 9, wherein a gasket is placed between the two flanges.

11. Seal assembly according to claim 8, 9 or 10, wherein the first and second element can be coupled, **characterized in that** the device consisting of the coupled first and second elements has a T-shape, the ends of the horizontal bar of the T having a notch near both ends, which notches each apply against the second flange.

12. Seal assembly according to claim 8, 9 or 10, **characterized in that** the first element has an external thread and the second element has an internal thread, which elements can be screwed together, one of the elements being designed to pass through opposite corresponding openings (8) in the first and second flanges.

**13.** Seal assembly according to claim 12, **characterized in that** the element with the external thread is a T-shaped element, the leg of the T being provided with the external thread and that the element with the internal thread is a nut.

**14.** Seal assembly according to claim 12 or 13, **characterized in that** the notches on both ends of the horizontal bar of the T-shaped element are at least partly located in opening which are formed in the second flange.

**15.** Seal assembly according to claim 8, 9 or 10, wherein the flanges are tapered in cross-section, **characterized in that** the first and second elements are connected to each other by means of a connecting element, to form one section of a ring-shaped device comprising a number of such sections, the first and second element of each section also being tapered in cross-section in order fit over the corresponding flanges.

**16.** Seal assembly according to any of the claims 8-15, **characterized in that** the thickness of the flange varies between succeeding clamping devices, in order to improve the quality of the seal.

**17.** Seal assembly according to claim 8, **characterized in that** the clamping means comprise an excenter which applies the pulling force and that the clamping means further comprise two V-shaped elements, which are positioned on opposite sides of both flanges, each of the free ends of the legs of one V-shaped element being connected with the corresponding free end of the leg of the other V-shaped element and that the tops of both V-shaped elements comprise means for accommodating the excenter.

**18.** Clamping device for use in a seal assembly according to any of the claims 8-17.

FIG. 1

FIG.2

FIG.3

FIG.4

FIG.5

FIG. 6

FIG. 7a

FIG. 7b

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

**European Patent Office**

**PARTIAL EUROPEAN SEARCH REPORT**

Application Number

which under Rule 45 of the European Patent Convention EP 03 07 9164
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 213 136 A (BRITISH MANNESMANN TUBE COMPAN; CHARLES WILLIAMS; WILLIAM GEORGE BELLA) 27 March 1924 (1924-03-27) * figures 1,5 * | 1,3-6,8, 10-16,18 | F16L23/036 |
| X | GB 512 406 A (LINDSAY LTD HENRY; HENRY LINDSAY) 1 September 1939 (1939-09-01) * page 1, line 100; figures 9-11 * | 1,3,8, 10,12, 15,16,18 | |
| X | FR 2 432 634 A (PFAUDLER WERKE AG) 29 February 1980 (1980-02-29) * figures 3,4 * | 1,8,15, 16,18 | |
| X | DE 723 940 C (MITTELDEUTSCHE STAHLWERKE AG) 14 August 1942 (1942-08-14) * figure 1 * | 1,8,15, 16,18 | |

TECHNICAL FIELDS
SEARCHED      (Int.Cl.7)

F16L

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Munich | 21 May 2004 | Dauvergne, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C07)

**European Patent Office**

**INCOMPLETE SEARCH
SHEET C**

Application Number

EP 03 07 9164

Claim(s) not searched:
       7, 17

Reason for the limitation of the search:

Lack of support in the description

**EP 1 548 347 A1**

**ANNEX TO THE EUROPEAN SEARCH REPORT
ON EUROPEAN PATENT APPLICATION NO.**

EP 03 07 9164

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2004

| Patent document cited in search report | | | Publication date | Patent family member(s) | | Publication date |
|---|---|---|---|---|---|---|
| GB 213136 | A | | 27-03-1924 | NONE | | |
| GB 512406 | A | | 01-09-1939 | NONE | | |
| FR 2432634 | A | | 29-02-1980 | DE 2833815 A1 | | 21-02-1980 |
| | | | | FR 2432634 A1 | | 29-02-1980 |
| | | | | IT 1117793 B | | 24-02-1986 |
| DE 723940 | C | | 14-08-1942 | NONE | | |

EPO FORM P0459